# EUROPÄISCHE PATENTANMELDUNG

(11) **EP 1 241 863 A2**
(43) Veröffentlichungstag der Anmeldung: **18.09.2002**
(21) Anmeldenummer: 02100192.0
(22) Anmeldetag: 26.02.2002
(51) Int. Cl.: H04M 3/51

(54) **Anrufverteilung in einem Call-Center mittels der gewählten Rufnummer**

(30) Priorität: 13.03.2001 DE 10111971
(71) Anmelder: SIEMENS AKTIENGESELLSCHAFT, 80333 München (DE)
(72) Erfinder: Hack, Andreas, 61273, Pfaffenwiesbach (DE)

(57) **Zusammenfassung**

Im Rahmen einer Anrufverteilung in einem Call-Center (CC) wird ein eintreffender Anruf (CL) durch eine Vermittlungseinrichtung (V) anhand einer vom Anrufer eingegebenen Wahlinformation (ZN,TN) zu einer Anrufverteilungseinrichtung (AVE) weitergeleitet. Die Anrufverteilungseinrichtung (AVE) prüft, ob die Wahlinformation eine zulässige, eine Anfrage spezifizierende Anfrageinformation (TN) enthält. Falls dies nicht zutrifft wird der Anrufer durch eine interaktive Sprachabfrageeinrichtung (IVR) zur Eingabe einer Anfrageinformation aufgefordert. Anhand der in der Wahlinformation enthaltenen oder der durch die Sprachabfrageeinrichtung abgefragten Anfrageinformation (TN) veranlasst die Anrufverteilungseinrichtung (AVE) ein Vermitteln des Anrufs (CL) über die Vermittlungseinrichtung (V) zu einem für die spezifizierte Anfrage zuständigen Agenten.

## Beschreibung

Im Rahmen der gegenwärtig stattfindenden, beträchtlichen Erweiterung von Kommunikationsmöglichkeiten gewinnen sog. Call-Center zunehmend an Bedeutung. Ein solches Call-Center weist in der Regel eine Anrufverteilungseinrichtung auf, mittels der eintreffende Anrufe zu einer Vielzahl von sogenannten Agenten vermittelt werden, die die eintreffenden Anrufe bearbeiten. Agenten sind dabei in der Regel Personen, können aber auch andere Informationsquellen, wie z.B. eine Datenbank, ein Sprachdialogsystem, eine Sprachabfrageeinrichtung, Ansagemaschinen oder Faxgeräte sein. Call-Center sind auf vielfältige Weise, z.B. zur telefonischen Kundenbetreuung oder zu anderen telefonisch erbringbaren Dienstleistungen, einsetzbar.

Eine Anrufverteilungseinrichtung eines Call-Centers wird häufig auch als ACD-Einheit (ACD: Automatic Call Distribution) bezeichnet. Eine derartige Anrufverteilungseinrichtung hat im wesentlichen die Aufgabe, die eintreffenden Anrufe entgegenzunehmen und entweder an einen freien Agenten weiterzuvermitteln oder - falls kein Agent frei ist, den Anruf in eine Warteschleife aufzunehmen.

Zeitgemäße Call-Center verfügen häufig über eine interaktive Sprachdialog- oder Sprachabfrageeinrichtung, die einen eintreffenden Anruf annimmt, um vom Anrufer eine Anfrageinformation über den Zweck oder die Art der beabsichtigten Anfrage abzufragen. Eine solche Sprachdialogeinrichtung wird häufig auch als IVR (Interactive Voice Response) bezeichnet. Durch eine solche Anfrageinformation kann beispielsweise ein bestimmter Vorgang, Auftrag, Agent, eine Anforderung oder eine Betreuungs- oder Bearbeitungskategorie spezifiziert werden. Eine derartige Anfrageinformation wird häufig auch als Ticketnummer bezeichnet. Abhängig von der abgefragten Anfrageinformation wird der eintreffende Anruf anschließend zu einem für die spezifizierte Anfrage zuständigen Agenten vermittelt.

Falls nach der Abfrage einer Anfrageinformation momentan kein zuständiger Agent frei ist, muß der Anrufer gemäß dem bisherigen Stand der Technik bis zum Freiwerden eines zuständigen Agenten in einer Warteschleife verharren. Da das Warten bei aufgebauter Verbindung erfolgt, fallen während der Wartezeit laufend Gesprächsgebühren, in der Regel zu Lasten des Anrufers an. Darüber hinaus werden durch bestehende Verbindungen im Wartezustand Nutzdatenkanäle und andere Systemresourcen des Call-Centers in unproduktiver Weise belegt.

Es ist Aufgabe der vorliegenden Erfindung, ein Verfahren zur Anrufverteilung in einem Call-Center anzugeben, das eine effizientere Verteilung eintreffender Anrufe erlaubt. Es ist weiterhin Aufgabe der Erfindung, eine Anrufverteilungseinrichtung zur Realisierung des erfindungsgemäßen Verfahrens anzugeben.

Gelöst wird diese Aufgabe durch ein Verfahren mit den Merkmalen des Patentanspruchs 1 und eine Anrufverteilungseinrichtung mit den Merkmalen des Patentanspruchs 7.

Ein wesentlicher Vorteil der Erfindung besteht darin, dass eintreffende Anrufe durch eine interaktive Sprachabfrageeinrichtung zur Abfrage von Anfrageinformationen nicht notwendigerweise angenommen werden müssen, wenn diese Anfrageinformationen, wie erfindungsgemäß vorgesehen, bereits in einer vom Anrufer eingegebenen Wahlinformation enthalten sind. In einem solchen Fall kann ein eintreffender Anruf anhand der in der Wahlinformation enthaltenen Anfrageinformation direkt zum zuständigen Agenten weitervermittelt werden, ohne dass bis zur Annahme des Anrufs durch den Agenten Gesprächsgebühren anfallen.

Ein weiterer Vorteil des erfindungsgemäßen Verfahrens ist darin zu sehen, dass zu dessen Durchführung kein Eingriff in eine bestehende Vermittlungseinrichtung erforderlich ist.

Vorteilhafte Ausführungsformen und Weiterbildungen der Erfindungen sind in den abhängigen Ansprüchen angegeben.

Nach einer vorteilhaften Ausführungsform der Erfindung wird für den Fall, dass die Anfrageinformation bereits in der Wahlinformation enthalten ist, der Anruf im Rufzustand zum zuständigen Agenten weitervermittelt. Solange sich der Anruf im Rufzustand befindet fallen keine Gesprächgebühren an. Im Rufzustand kann vorzugsweise ein Rufton, z.B. das Freizeichen, zum Anrufer übermittelt werden.

Weiterhin kann durch die Anrufverteilungseinrichtung eine Quellrufnummer des Anrufers, z.B. im Rahmen des ANI- (Automatic Number Identification) oder CLI-Leistungsmerkmals (Calling Line Identification) erfasst werden. Erfasste Quellrufnummern von Anrufern können beispielsweise dazu dienen, die Anrufer unterschiedlichen Berechtigungs- oder Benutzergruppen zuzuordnen. Die Weitervermittlung von Anrufen zu einem jeweils zuständigen Agenten kann dann abhängig von einer jeweils erfassten Quellrufnummer erfolgen.

Nach einer weiteren vorteilhaften Ausführungsform der Erfindung erfolgt die Weiterleitung eines Anrufs zur Anrufverteilungseinrichtung anhand eines ersten Teils der Wahlinformation und die Prüfung hinsichtlich der Anfrageinformation anhand eines zweiten Teils der Wahlinformation. Sofern die Wahlinformation eine Rufnummer umfasst, kann die erste bzw. zweite Wahlinformation vorzugsweise aus einer jeweils vorgegebenen Anzahl der höherwertigen bzw. der niederwertigen Ziffern dieser Rufnummer bestehen.

Nach einer besonders vorteilhaften Variante der Erfindung kann der zweite Teil der Wahlinformation in der Art einer Durchwahlnummer gebildet sein. In diesem Fall wird der zweite Teil der Wahlinformation von der Vermittlungseinrichtung als Durchwahlnummer interpretiert und zu der durch den ersten Teil der Wahlinformation identifizierten Anrufverteilungseinrichtung weitergeleitet. Der zweite Teil der Wahlinformation, d.h. die Durchwahlinformation, wird dann erst in der Anrufverteilungseinrichtung ausgewertet und als Anfrageinformation bzw. Ticketnummer interpretiert, um den Anruf zu einem dafür zuständigen Agenten weiter zu vermitteln. Bei dieser Variante der Erfindung kann ein Anrufer eine Ticketnummer auf einfache Weise als Durchwahlnummer hinter einer Rufnummer des Call-Centers eingeben, um automatisch mit einem für diese Ticketnummer zuständigen Agenten verbunden zu werden.

Nach einer vorteilhaften Weiterbildung der Erfindung kann durch die Anrufverteilungseinrichtung anhand der Anfrageinformation veranlasst werden, dass der Anruf anstatt zu einem zuständigen Agenten zu einem durch eine Weitervermittlungsrufnummer identifizierten Ziel vermittelt wird. Eine solches, durch eine Weitervermittlungsrufnummer identifizertes Ziel kann beispielsweise ein externes oder internes Endgerät, eine weitere Anrufverteilungseinrichtung oder auch ein externes Call-Center sein.

Zum dynamischen Verwalten einer Vielzahl von im laufenden Betrieb wechselnden Anfrageinformationen, z.B. in Form von Durchwahlnummern bzw. Ticketnummern, die jeweils mindestens einem zuständigen Agenten und/oder mindestens einer Weitervermittlungsrufnummer zugeordnet sind, kann in der Anrufverteilungseinrichtung eine Datenbank vorgesehen sein. Die Datenbank ist vorzugsweise im laufenden Betrieb über die Vermittlungseinrichtung aktualisierbar. Auf diese Weise kann eine Aktualisierung der Datenbank, z.B. ein Setzen, Löschen oder eine Änderung der Zuordnung einer Ticketnummer, im laufenden Betrieb durch einen jeweils zuständigen Agenten vorgenommen werden.

Gemäß einer weiteren Ausführungsform kann die Anrufverteilungseinrichtung auch in der Vermittlungseinrichtung integriert sein.

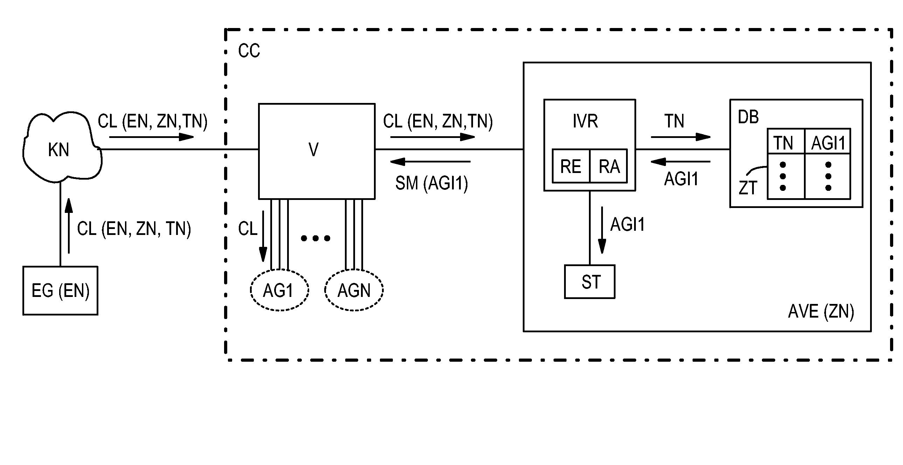

Ein Ausführungsbeispiel der Erfindung wird nachfolgend anhand der Zeichnung näher erläutert.

Die Figur zeigt ein an ein Kommunikationsnetz angeschlossenes Call-Center in schematischer Darstellung.

In der Figur ist ein Call-Center CC schematisch dargestellt, das eine Vermittlungseinrichtung V sowie eine Anrufverteilungseinrichtung AVE umfasst. Das Call-Center CC ist über die Vermittlungseinrichtung V an ein Kommunikationsnetz KN, z.B. ein öffentliches ISDN-Netz, angeschlossen. In der Figur ist weiterhin ein an das Kommunikationsnetz KN angekoppeltes Endgerät EG mit Endgeräterufnummer EN exemplarisch dargestellt.

An die Vermittlungseinrichtung V ist eine Vielzahl von Agententerminals angeschlossen, die verschiedenen Agentengruppen AG1,...,AGN, gegebenenfalls dynamisch, zugeordnet sind. Eine jeweilige Agentengruppe AG1,... bzw. AGN ist jeweils für bestimmte, ihr zugeordnete Anfragen an das Call-Center CC zuständig und umfasst jeweils einen oder mehrere Agenten.

Die Anrufverteilungseinrichtung AVE ist an die Vermittlungseinrichtung V über eine durchwahlfähige sog. Trunk-Leitung, z.B. mit S_{2M} -Schnittstelle angeschlossen. Anstelle der S_{2M}-Schnittstelle kann auch eine S₀-Schnittstelle, eine sog. Voice-over-IP-Schnittstelle oder eine andere Schnittstelle mit Sprachkanal verwendet werden. Der Anrufverteilungseinrichtung AVE ist innerhalb der Vermittlungseinrichtung eine Rufnummer ZN zugeordnet, mit der die Anrufverteilungseinrichtung AVE aus dem Kommunikationsnetz KN heraus anwählbar ist. Die Rufnummer ZN kann aus der Sicht eines externen Anrufers einer vorgegebenen Servicerufnummer des Call-Centers CC entsprechen. Die Anrufverteilungseinrichtung AVE wird vorzugsweise mittels eines Personalcomputers mit Trunk-Zugang realisiert.

Die Anrufverteilungseinrichtung AVE weist als Funktionskomponenten eine interaktive Sprachabfrageeinrichtung IVR, eine Datenbank DB sowie eine Steuereinrichtung ST auf. Die Sprachabfrageeinrichtung IVR verfügt über eine Rufnummernerfassungseinrichtung RE sowie eine Rufnummernauswerteeinrichtung RA und ist vorzugsweise als Sprachdialogeinrichtung ausgebildet. Die Datenbank DB und die Steuereinrichtung ST sind jeweils an die Sprachabfrageeinrichtung IVR gekoppelt. Die Funktionskomponenten der Anrufverteilungseinrichtung AVE können vorzugsweise als auf dieser ablaufende Software- oder CTI-Anwendungen (CTI: Computer Telephony Integration) realisiert sein.

Zur Steuerung von Vermittlungsfunktionen der Vermittlungseinrichtung V ist die Sprachabfrageeinrichtung IVR an die Vermittlungseinrichtung V vorzugsweise mittels einer sog.
TCP/IP-Socketschnittstelle (TCP: Transmission Control Protocol; IP: Internet Protocol) gekoppelt, auf der eine sog. CSTA-Schnittstelle (Computer Supported Telephony Application) oder eine sog. TAPI-Schnittstelle (Telephone Application Programming Interface) implementiert ist.

Die Datenbank DB weist ihrerseits eine oder mehrere Zuordnungstabellen ZT auf, in denen unterschiedliche Ticketnummern TN,... jeweils einer Agentengruppeninformation AGI1,... zugeordnet sind. Die Ticketnummern TN,... können im Rahmen unterschiedlicher Betreuungsaufgaben des Call-Centers CC beispielsweise Auftragsnummern, Produktnummern, Vorgangsnummern, Bearbeitungsnummern, Problemidentifikationsnummern, Anforderungsnummern oder Anfragenummern sein. Durch eine einer Ticketnummer TN,... zugeordnete Agentengruppeninformation AGI1,... wird eine für die Bearbeitung dieser Ticketnummer zuständige Agentengruppe AG1,... bzw. AGN spezifiziert und/oder identifiziert. Die Agentengruppeninformationen AGI1,... können einer Ticketnummer TN,... sowohl direkt als auch indirekt zugeordnet sein. Bei einer indirekten Zuordnung kann eine Ticketnummer TN beispielsweise in einer ersten der Zuordnungstabellen ZT einer Produktgruppe zugeordnet sein, die wiederum in einer zweiten der Zuordnungstabellen ZT einem Betreuungs- und/oder Fähigkeitenprofil zugeordnet ist, das schließlich in einer dritten der Zuordnungstabellen ZT einer entsprechend befähigten Agentengruppe zugeordnet ist. Gegebenenfalls können auch eine oder mehrere Zuordnungstabellen vorgesehen sein, in denen vorgegebene Endgeräterufnummern rufender Endgeräte bestimmten Agentengruppen zugeordnet sind oder in denen die Zuordnung zwischen Ticktnummern und Agentengruppeninformationen abhängig von der Endgeräterufnummer eines rufenden Endgerätes ist.

Die Zuordnungstabellen ZT und die Ticketnummern TN,... werden von der Sprachabfrageeinrichtung IVR dynamisch verwaltet. Eine dynamische Verwaltung der Ticketnummern TN,... ist erforderlich, da die Tickenummern TN,... meistens nur temporär zugeordnet werden. In der Regel werden Ticketnummern nach Bearbeitung einer betreffenden Anfrage durch einen zuständigen Agenten gelöscht und/oder neu für andere Zwecke vergeben. Aus diesem Grund ist die Datenbank DB derart an die Sprachabfrageeinrichtung IVR gekoppelt, dass die in der Datenbank DB gespeicherten Ticketnummern TN,... und deren Zuordnung zu Agentengruppen von den Agententerminals aus im laufenden Betrieb über die Vermittlungseinrichtung V und die Sprachabfrageinrichtung IVR aktualisiert werden können.

Nach einer vorteilhaften Realisierungsvariante der Erfindung können in der Anrufverteilungseinrichtung AVE anstelle der einzelnen Datenbank DB zwei verschiedene Datenbanken (nicht dargestellt) vorgesehen sein. Eine erste dieser Datenbanken kann dann dazu dienen, feste Zuordnungen von Ticketnummern zu Agentengruppen oder andere statische Zuordnungen, z.B. zwischen Ticketnummern, Produktnummern, Agentenfähigkeiten und/oder Agentengruppen, zu speichern, während die zweite dieser Datenbanken zur Speicherung temporärer und häufig wechselnder Zuordnungen benutzt wird. Eine solche Verwendung verschiedener Datenbanken für feste Zuordnungen einerseits und wechselnde Zuordnungen andererseits erlaubt eine flexiblere Pflege der gespeicherten Daten und erhöht die Betriebssicherheit.

Im Folgenden wird im Rahmen des vorliegenden Ausführungsbeispiels eine Anfrage eines externen Anrufers betrachtet. Hierbei sei beispielhaft angenommen, dass die Anfrage einen durch die Ticketnummer TN identifizierten Vorgang betrifft. Die Ticketnummer TN kann dem Anrufer beispielsweise im Zuge einer früheren Anfrage zugewiesen worden sein.

Der Anrufer ruft vom Endgerät EG aus über das Kommunikationsnetz KN beim Call-Center CC an. Zu diesem Zweck gibt der Anrufer die Rufnummer ZN sowie unmittelbar daran anschließend die Ticketnummer TN als Wahlinformation am Endgerät EG ein. Infolgedessen wird ein Anruf CL durch das Kommunikationsnetz KN zur Vermittlungseinrichtung V des Call-Centers CC vermittelt. Im Rahmen des Anrufs CL wird vom Endgerät EG dessen Endgeräterufnummer EN sowie die eingegebene Wahlinformation, d.h. die Rufnummer ZN sowie die Ticketnummer TN, zur Vermittlungseinrichtung V übermittelt. Die Vermittlungseinrichtung V analysiert daraufhin die übermittelte Wahlinformation im Rahmen ihrer üblichen Vermittlungsfunktionalität. Hierbei wird die Rufnummer ZN als Rufnummer der Anrufverteilungseinrichtung AVE erkannt. Außerdem wird die Ticketnummer TN als Durchwahlnummer interpretiert, die als solche in der durch die Rufnummer ZN identifizierten Anrufverteilungseinrichtung AVE weiter auszuwerten ist. Für eine jeweilige Rufnummer bzw. Durchwahlnummer kann in der Vermittlungseinrichtung V jeweils eine feste Stellenzahl vorgegeben sein.

Nach der Auswertung der Wahlinformation wird der Anruf CL durch die Vermittlungseinrichtung V zu der durch die Rufnummer ZN identifizierten Anrufverteilungseinrichtung AVE im Rufzustand, d.h. vor einem eigentlichen Verbindungsaufbau, weitergeleitet. Der Anruf CL wird dabei zur Sprachabfrageeinrichtung IVR vermittelt, deren Rufnummernerfassungseinrichtung RE die mit dem Anruf CL übermittelte Wahlinformation erfaßt. Die Erfassung der Zielrufnummer ZN und der Durchwahlnummer TN kann hierbei z.B. mittels des sog. DNIS-Dienstes (DNIS: Dialed Number Identification Service) erfolgen. Die im Rahmen des Anrufs CL ebenfalls zur Sprachabfrageeinrichtung IVR übermittelte Endgeräterufnummer EN des rufenden Endgerätes EG kann ferner mit Hilfe des sog. ANI- (Automatic Number Identification) oder CLI-Leistungsmerkmals (Calling Line Identification) erfasst werden.

Durch die Rufnummernauswerteeinrichtung RA wird zunächst geprüft, ob die erfasste Wahlinformation eine Durchwahlnummer enthält. Falls dies zutrifft wird durch die Rufnummernauswerteeinrichtung RA weiterhin geprüft, ob die enthaltende Durchwahlnummer eine gültige Ticketnummer ist. Während dieser Auswertung der Wahlinformation wird durch die Sprachabfrageeinrichtung IVR ein Rufton, z.B. ein Freizeichen, über die Vermittlungseinrichtung V zum rufenden Endgerät EG zurückübermittelt.

Im vorliegenden Ausführungsbeispiel wird durch die Rufnummernauswerteeinrichtung RA erkannt, dass in der Wahlinformation die Durchwahlnummer TN enthalten ist. Zur Überprüfung dieser Durchwahlnummer TN wird eine die Durchwahlnummer TN enthaltende Anfragemeldung zur Datenbank DB übermittelt. In der Datenbank DB werden daraufhin die Zuordnungstabellen ZT nach der übermittelten Durchwahlnummer TN durchsucht. Falls-wie im vorliegenden Ausführungsbeispiel - ein Eintrag gefunden wird, durch den die übermittelte Durchwahlnummer TN einer Agentengruppeninformation zugeordnet ist, wird die zugeordnete Agentengruppeninformation, hier AGI1, zur Sprachabfrageeinrichtung IVR übermittelt. Andernfalls wird eine Misserfolgsmeldung zur Rufnummernauswerteeinrichtung RA übermittelt.

Gegebenenfalls kann auch die Endgeräterufnummer EN des rufenden Endgerätes EG zur Datenbank DB übermittelt werden, um eine Agentengruppeninformation abhängig von der Quellrufnummer des rufenden Endgerätes zu selektieren.

Nur falls die Rufnummernauswerteeinrichtung RA in der Wahlinformation keine Durchwahlinformation erkennt oder im Rahmen der Gültigkeitsprüfung eine Misserfolgsmeldunung von der Datenbank DB empfängt, wird der Anruf CL durch die Sprachabfrageeinrichtung IVR angenommen. Nach Annahme des Anrufs CL wird ein Sprachdialog ausgeführt, in dessen Rahmen die Sprachabfrageeinrichtung IVR den Anrufer akustisch zur Eingabe einer Ticketnummer auffordert. Der Anrufer kann hierbei z.B. zur Eingabe der Ticketnummer über eine Rufnummerntastatur seines Endgerätes EG, oder auch zur Spracheingabe der Ticketnummer aufgefordert werden. Zur Auswertung einer vom Anrufer gesprochenen Ticketnummer kann in der Sprachabfrageeinrichtung IVR eine Spracherkennungseinrichtung (nicht dargestellt) vorgesehen sein. Nach der Eingabe der Ticketnummer wird deren Gültigkeit, wie obenstehend erläutert, mittels einer Datenbankabfrage geprüft. Bei negativem Prüfungsergebnis wird der Anrufer erneut zur Eingabe einer gültigen Ticketnummer aufgefordert. Nach der Erkennung einer gültigen Ticketnummer kann der Anruf CL bis zur Annahme durch einen zuständigen Agenten wieder in den Rufzustand, d.h. in einen verbindungslosen Zustand, zurückversetzt werden.

Eine gültige Ticketnummer wird durch Rufnummernauswerteeinrichtung RA daran erkannt, dass von der Datenbank DB eine dieser Ticketnummer zugeordnete Agentengruppeninformation übermittelt wird. Die übermittelte Agentengruppeninformation spezifiziert und identifiziert dabei diejenige Agentengruppe, die für die Bearbeitung des durch diese Ticketnummer identifizierten Vorgangs zuständig ist.

Im vorliegenden Ausführungsbeispiel wird von der Datenbank DB die der Ticketnummer TN zugeordnete Agentengruppeninformation AGI1 zur Rufnummernauswerteeinrichtung RA übermittelt, wodurch die Ticketnummer TN als gültig erkannt wird. Infolgedessen wird die Agentengruppeninformation AGI1 von der Sprachabfrageeinrichtung IVR zur Steuereinrichtung ST übermittelt. Die Steuereinrichtung ST veranlaßt daraufhin ein Umkoppeln des Anrufs CL im Rufzustand auf die durch die Agentengruppeninformation AGI1 identifizierte Agentengruppe AG1. Zu diesem Zweck wird eine die Agentengruppeninformation AGI1 enthaltende Steuermeldung SM, über die oben erwähnte CSTAoder TAPI-Schnittstelle zur Vermittlungseinrichtung V übermittelt. Durch die Steuermeldung SM wird die Vermittlungseinrichtung V dazu veranlaßt, den Anruf CL zu einem freien Agenten der Agentengruppe AG1 durchzustellen oder, falls momentan kein Agent dieser Agentengruppe AG1 frei ist, den Anruf CL in eine dieser Agentengruppe AG1 zugeordnete Warteschlange einzuordnen.

Da der Anruf CL im Rufzustand zum zuständigen Agenten vermittelt wird, fallen bis zur tatsächlichen Annahme des Anrufs CL durch den Agenten keine Gesprächsgebühren an. Darüber hinaus werden bis dahin keine Nutzdatenkanäle belegt, falls die Vermittlungseinrichtung eine Leitwegoptimierung durchführen kann.

Nach der Bearbeitung des Anrufs CL durch den zuständigen Agenten kann dieser die Ticketnummer TN in der Datenbank DB löschen. Gegebenenfalls kann der zuständige Agent auch eine neue Ticketnummer an den Anrufer vergeben, diese in der Datenbank DB setzen und einer - ggf. von der Agentengruppe AG1 verschiedenen - Agentengruppe zuordnen.

## Patentansprüche

1. Verfahren zur Anrufverteilung in einem Call-Center (CC), bei dem
a) ein eintreffender Anruf (CL) durch eine Vermittlungseinrichtung (V) anhand einer vom Anrufer eingegebenen Wahlinformation (ZN,TN) zu einer Anrufverteilungseinrichtung (AVE) weitergeleitet wird,
b) durch die Anrufverteilungseinrichtung (AVE) geprüft wird, ob die Wahlinformation eine zulässige, eine Anfrage spezifizierende Anfrageinformation (TN) enthält, und falls dies nicht zutrifft der Anrufer durch eine interaktive Sprachabfrageeinrichtung (IVR) zur Eingabe einer Anfrageinformation (TN) aufgefordert wird, und
c) die Anrufverteilungseinrichtung (AVE) anhand der Anfrageinformation (TN) ein Vermitteln des Anrufs (CL) über die Vermittlungseinrichtung (V) zu einem für die spezifizierte Anfrage zuständigen Agenten veranlasst.

2. Verfahren nach Anspruch 1,
**dadurch gekennzeichnet,**
**dass** falls die Anfrageinformation (TN) bereits in der Wahlinformation enthalten ist, der Anruf (CL) im Rufzustand zum zuständigen Agenten vermittelt wird.

3. Verfahren nach einem der vorhergehenden Ansprüche,
**dadurch gekennzeichnet,**
**dass** durch die Anrufverteilungseinrichtung (AVE) eine Quellrufnummer (EN) des Anrufers erfasst wird und die Vermittlung des Anrufs (CL) abhängig von der erfassten Quellrufnummer (EN) erfolgt.

4. Verfahren nach einem der vorhergehenden Ansprüche,
**dadurch gekennzeichnet,**
**dass** die Weiterleitung des Anrufs (CL) zur Anrufverteilungseinrichtung (AVE) anhand eines ersten Teils (ZN) der Wahlinformation erfolgt, und die Prüfung hinsichtlich der Anfrageinformation anhand eines zweiten Teils (TN) der Wahlinformation erfolgt.

5. Verfahren nach einem der vorhergehenden Ansprüche,
**dadurch gekennzeichnet,**
**dass** die Anrufverteilungseinrichtung (AVE) anhand der Anfrageinformation veranlasst, dass der Anruf statt zum zuständigen Agenten zu einem durch eine Weitervermittlungsrufnummer identifizierten Ziel vermittelt wird.

6. Verfahren nach einem der vorhergehenden Ansprüche,
**dadurch gekennzeichnet,**
**dass** in der Anrufverteilungseinrichtung (AVE) eine Vielzahl von im laufenden Betrieb wechselnden Anfrageinformationen (TN,...), die jeweils mindestens einem zuständigen Agenten und/oder mindestens einer Weitervermittlungsrufnummer zugeordnet werden, dynamisch verwaltet wird.

7. Anrufverteilungseinrichtung (AVE) zum Ankoppeln an eine Vermittlungseinrichtung (V), mit
a) Erfassungsmitteln (RE) zum Erfassen einer in einer Anrufsignalisierung eines eintreffenden Anrufs (CL) enthaltenen Wahlinformation,
b) Auswertemitteln (RA) zum Prüfen, ob die erfasste Wahlinformation eine zulässige, eine Anfrage spezifizierende Anfrageinformation (TN) enthält,
c) einer interaktiven Sprachabfrageeinrichtung (IVR) zum sprachgesteuerten Abfragen einer Anfrageinformation (TN) vom Anrufer, und
d) einer Steuereinrichtung (ST) zum Weitervermitteln des Anrufs (CL) anhand der in der Wahlinformation enthaltenen oder der vom Anrufer abgefragten Anfrageinformation (TN) über die Vermittlungseinrichtung (V) zu einem für die spezifizierte Anfrage zuständigen Agenten.

8. Anrufverteilungseinrichtung nach Anspruch 7,
**dadurch gekennzeichnet,**
**dass** die Sprachabfrageeinrichtung (IVR) eine Spracherkennungseinheit zum Umsetzen von gesprochenen Anfrageinformationen in Anfragedaten aufweist.

9. Anrufverteilungseinrichtung nach Anspruch 7 oder 8,
**dadurch gekennzeichnet,**
**dass** die Steuereinrichtung (ST) ausgestaltet ist zum Weitervermitteln des Anrufs (CL) anhand der in der Wahlinformation enthaltenen oder der vom Anrufer abgefragten Anfrageinformation (TN) über die Vermittlungseinrichtung (V) zu einem durch eine Weitervermittlungsrufnummer identifizierten Ziel.

10. Anrufverteilungseinrichtung nach Anspruch 7, 8 oder 9, **gekennzeichnet durch**
eine im laufenden Betrieb über die Vermittlungseinrichtung (V) aktualisierbare Datenbank (DB) zum Speichern einer Zuordnung von wechselnden, dynamisch verwalteten Anfrageinformationen (TN,...) zu jeweils mindestens einem zuständigen Agenten und/oder mindestens einer Weitervermittlungsrufnummer.

11. Anrufverteilungseinrichtung nach einem der Ansprüche 7 bis 10,
**gekennzeichnet durch**
eine CSTA-Schnittstelle oder eine TAPI-Schnittstelle zum Ankoppeln an die Vermittlungseinrichtung (V).
